# FASCICULE DE BREVET EUROPEEN

(11) **EP 0 599 062 B1**
(45) Date de publication et mention de la délivrance du brevet: **28.08.1996**
(21) Numéro de dépôt: 93117132.6
(22) Date de dépôt: 22.10.1993
(51) Int. Cl.: B31F 1/28

(54) **Dispositif de limitation de la largeur d'encollage au sein d'une machine de fabrication en continu d'un élément en bande stratifié**
Vorrichtung zur Begrenzung einer Leimauftragsbreite in einer Schichtmaschine
Apparatus for limiting adhesive width in a continuous laminating machine

(30) Priorité: 25.11.1992 CH 3605/92
(43) Date de publication de la demande: 01.06.1994
(73) Titulaire: PETERS MASCHINENFABRIK GmbH, D-22525 Hamburg (DE)
(72) Inventeur: Schulz, Jens, D-22559 Hamburg (DE)
(74) Mandataire: Colomb, Claude

(56) Documents cités:
- EP-A- 0 179 395
- EP-A- 0 362 423
- GB-A- 2 029 278
- GB-A- 2 034 608
- GB-A- 2 068 268
- GB-A- 2 184 959
- US-A- 3 997 095

## Description

La présente invention est relative à un dispositif de limitation de la largeur d'encollage au sein d'une machine de fabrication en continu d'un élément en bande stratifié, et plus particulièrement à un dispositif de contrôle de la répartition de la largeur d'un film de colle recueilli par un rouleau-encolleur dans une station d'encollage double face au sein d'une machine de fabrication de carton ondulé.

Dans une telle station d'encollage double face, passe, d'une part pratiquement directement, une première bande de papier de parement et d'autre part au moins une seconde bande dite "simple face", c'est-à-dire un papier cannelé collé sur un papier de base. Dans cette station, un rouleau-encolleur dépose une quantité prédéterminée de colle sur chacune des crêtes de la bande simple face, de telle sorte que l'on puisse les assembler avec le papier de parement au niveau d'une station dite "double face" composée d'une succession de tables chauffantes et de moyens de pression d'assemblage.

L'un des problèmes inhérents au défilement à haute vitesse du papier de parement à travers les différentes stations est la déviation latérale que, malgré tous les dispositifs de guidage, on ne peut réduire à une valeur inférieure de plus ou moins 30 millimètres. De ce fait, un encollage systématique de toute la largeur des cannelures de la bande simple face conduit très rapidement à un encrassement des tables de chauffage de la station double face de par les dépôts de colle des parties de cannelures non recouvertes. Ce phénomène étant aléatoire, on obtient alors deux larges traînées de colle durcie sur la table qui risquent fortement d'endommager les bords du carton ondulé produit par la suite.

Pour résoudre ce problème, les bacs de colle dans lesquels barbotent les rouleaux-encolleurs de la station d'encollage double face sont conçus à géométrie variable, c'est-à-dire que chacune des parois latérales est automatiquement déplacée transversalement selon la position instantanée de la bande de parement telle que lue par un dispositif de détection approprié. Ainsi, la position et la largeur du film de colle recueilli par ce rouleau-encolleur sont directement liées à la situation de la bande de papier de parement, ce qui fait que lors de l'assemblage dans la station double face, les cannelures non recouvertes par ce papier de parement n'ont, au préalable, pas reçu de colle.

Bien que d'un fonctionnement satisfaisant, ce dispositif de limitation automatique d'encollage souffre de nombreux inconvénients. Premièrement, il est pratiquement impossible de déplacer rapidement ces parois latérales sans entraîner une modification involontaire du volume de colle présent, ce qui peut se traduire par un excès ou une absence de colle sur le rouleau barboteur puis sur les crêtes. En d'autres termes, on constate quand même des salissures sur les tables chauffantes lors des transitions trop rapides ou une production de carton ondulé s'effeuillant. D'autre part, la technique des parois latérales mobiles est délicate notamment au niveau des joints d'étanchéité entre la cuve et le périmètre des parois. De ce fait, ces dispositifs sont plutôt onéreux à réaliser.

Le but de la présente invention est un dispositif de limitation de la zone encollée sur un papier ondulé qui soit plus efficace, c'est-à-dire qui puisse évoluer de manière beaucoup plus rapide tout en assurant une absence totale de colle sur les parties de crêtes voulues. De préférence, la conception d'un tel dispositif doit être suffisamment simple pour permettre une réalisation à meilleur coût.

Ces buts sont réalisés grâce à un dispositif de limitation d'encollage au sein d'une machine de fabrication en continu d'un élément en bande stratifié comprenant un premier dispositif de détection de la position instantanée des bords d'un premier élément en bande passant par un premier cylindre-guide, lequel dispositif pilote un second dispositif contrôlant la position et la largeur du film de colle recueilli par un rouleau-encolleur rotatif barbotant dans un bac de colle, puis déposant cette colle sur un second élément en bande passant autour d'un second cylindre-guide du fait que le second dispositif comprend une paire de racles, chacune étant retenue perpendiculairement contre le rouleau-encolleur par des moyens contrôlant sa position le long du bord de ce rouleau-encolleur en fonction de la lecture du premier dispositif de telle sorte que le bord intérieur de la bande de colle enlevée par cette racle soit analogue à la position du bord correspondant du premier élément en bande.

En d'autres termes, le rouleau-encolleur barbote sur toute sa longueur dans le bac de colle et on se contente de racler, sur ce rouleau, deux bandes dans le film de colle, bandes dont le bord intérieur est alors en exacte correspondance avec le papier de parement à venir. Par contre, les deux bandes de film de colle situées aux extrémités du rouleau-encolleur, qui ne rencontrent aucun papier simple face au niveau du cylindre-guide, se contentent de se renouveler indéfiniment sans autre. Comme on peut aisément le comprendre, l'avantage majeur de ce dispositif est qu'il suffit de déplacer avec une très grande précision transversalement ces racles, ce qui nécessite qu'un très faible effort, afin d'obtenir une délimitation d'encollage voulue pouvant évoluer instantanément en fonction des déviations aléatoires du papier de parement.

Utilement, chaque racle est doublée d'une lame inférieure plus large, parallèle et écartée du rouleau-encolleur d'une distance prédéterminée pour réduire l'épaisseur du film de colle parvenant à cette racle, augmentant d'autant son pouvoir de suppression local du film de colle.

Avantageusement, les moyens de maintien et de positionnement de la racle et, si désiré, de la lame, comprennent un bras porteur sensiblement perpendiculaire au rouleau-encolleur et monté sur un chariot pouvant coulisser le long d'un chemin solidaire d'une traverse parallèle au rouleau-encolleur, la racle, et si désiré la lame, étant fixées en l'extrémité orientée vers le rouleau-encolleur, l'autre extrémité portant un moyen de détection de position en vis-à-vis d'une réglette de lecture montée le long de la traverse et étant entraînée le long de la traverse par un actuateur linéaire.

Grâce à cet agencement, la racle et son éventuelle lame complémentaire sont maintenues de manière très rigide dans le sens orthogonal au rouleau-encolleur mais peuvent être très aisément déplacées dans le sens latéral. Tout déplacement latéral peut être directement détecté sans erreur grâce à une photodiode placée en vis-à-vis d'une réglette pour comparaison et correction, par des moyens électroniques, avec la position instantanée du bord correspondant du papier de parement.

Avantageusement, l'actuateur linéaire est un cylindre hydraulique séparé en deux chambres par un piston flottant, la liaison entre ce piston et une bague cerclant le cylindre et solidaire de l'extrémité du bras porteur étant réalisée par magnétisme.

En comparaison avec d'autres moyens de déplacement linéaire, tels que la rotation d'une vis sans fin dans un orifice taraudé du chariot, ce dispositif décrit présente une rapidité et une précision accrue.

Utilement, la racle est réalisée dans une tôle de bronze ou de plastique rigide, alors que la lame est de préférence réalisée en cuivre ou en laiton. Un dispositif conforme à l'invention est représenté, à titre nullement limitatif, sur les dessins annexés dans lesquels :
- la figure 1 est une vue schématique de côté,
- la figure 2 est une vue schématique du dessus incorporant un diagramme du dispositif de contrôle.

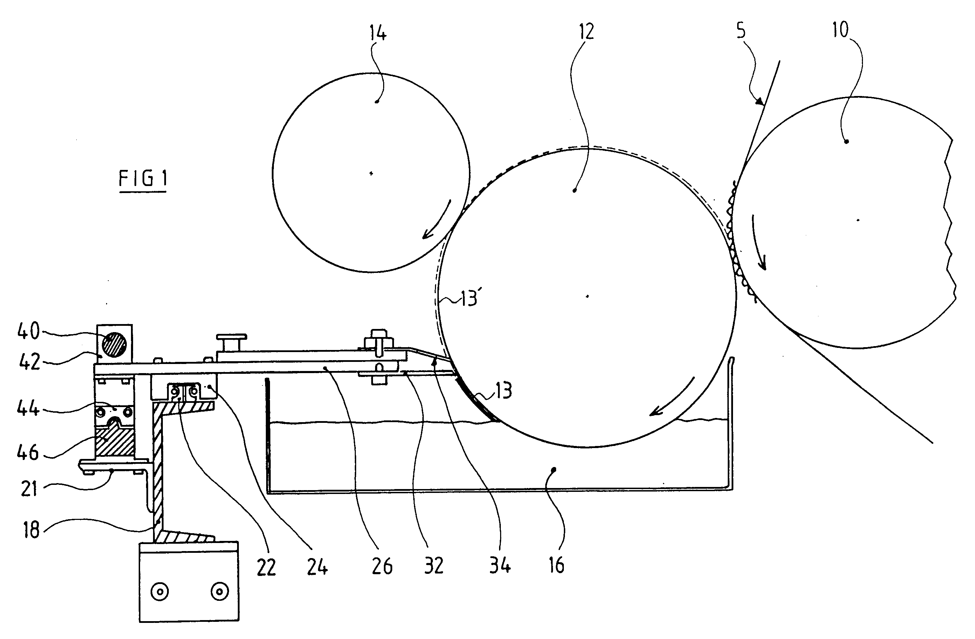

On reconnaît sur la figure 1 les organes principaux de l'une des sections d'une station d'encollage double face, à savoir : un cylindre-guide 10 autour duquel passe un papier ondulé simple face 5 dont les cannelures sont orientées vers l'extérieur du cylindre-guide de telle sorte à faire face à un rouleau-encolleur 12. Ce rouleau-encolleur barbote dans un bac de colle 16 de telle sorte que, lors de sa rotation comme illustré sur la figure 1 dans le sens de rotation des aiguilles d'une montre, il emmène avec lui un film de colle 13 sur sa surface cylindrique. L'épaisseur de ce film de colle est par la suite calibrée par un rouleau lamineur 14 qui, en tournant dans le même sens, refoule l'excès. Ce film de colle d'épaisseur calibrée permet alors l'encollage avec une quantité toujours juste suffisante des crêtes du papier 5 uniquement.

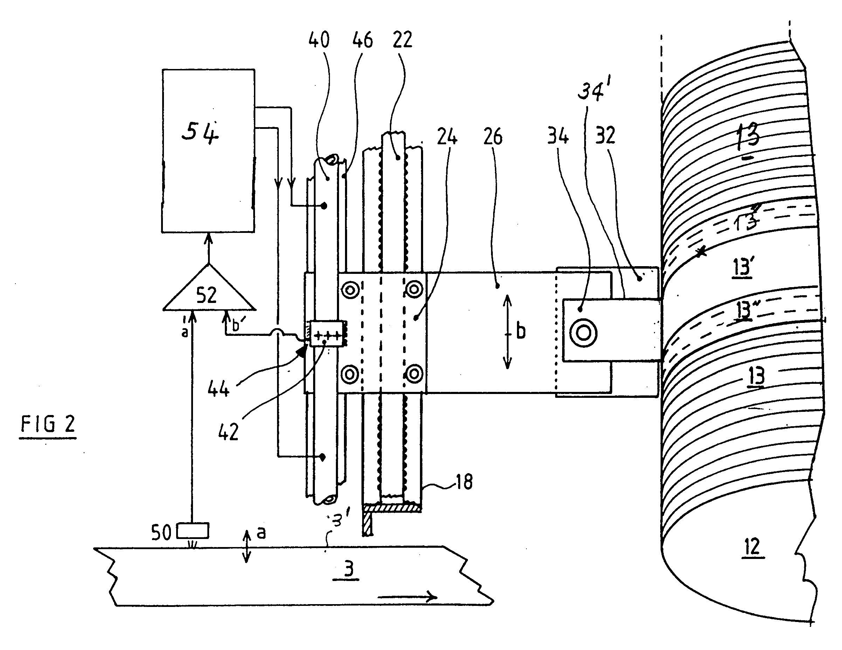

Comme illustré sur les figures 1 et 2, le dispositif de délimitation d'encollage est, pour l'essentiel, monté sur une traverse 18 du bâti parallèle au rouleau-encolleur 12. Sur la surface supérieure de cette traverse 18 est rapportée une paire de paliers lisses 22 ou plus avantageusement une paire de chemins de billes et disposée parallèlement au niveau de chaque extrémité du rouleau-encolleur 12. Sur chacun de ces chemins de billes 22 est monté un chariot 24 pouvant coulisser avec un minimum de friction. Ce chariot 24 supporte un bras porteur 26 perpendiculaire aux chemins de billes 22, donc également au rouleau-encolleur 12.

Une première racle 34 est fixée de manière non permanente à l'extrémité du bras porteur 26 orienté vers le rouleau-encolleur 12. Par exemple, cette racle 34 est assemblée au moyen de vis sur la face supérieure de l'extrémité du bras afin de pouvoir correctement ajuster sa position finale de telle sorte que sa face frontale soit appliquée fermement contre la surface cylindrique du rouleau-encolleur 12. Par exemple, cette racle 34 est réalisée dans une tôle de bronze ou une plaque de plastique et ce dans une largeur de l'ordre de 40 millimètres. Cette racle 34 est légèrement coudée de telle sorte à réaliser, avec la tangente située au point d'intersection avec le rouleau-encolleur 12, un angle de l'ordre de 40 à 50 degrés.

Après de nombreux essais en atelier, il s'est avéré utile de monter également à l'extrémité du bras porteur 26 une lame 32 plus large que la racle 34 mais fixée de telle sorte à respecter un écart de l'ordre de 0,1 à 1 millimètre avec la surface cylindrique du rouleau-encolleur 12. Cette lame 32 peut présenter une largeur de l'ordre de 60 millimètres et être réalisée, par exemple, en une plaque de cuivre ou de laiton. L'angle d'attaque avec la tangente au point d'intersection avec le rouleau-encolleur peut prendre de l'ordre de 60 à 80 degrés.

En l'extrémité opposée, ce bras porteur 26 porte de manière sous-jacente, un détecteur de déplacement 44 monté en vis-à-vis d'une règle 46 fixée parallèlement le long de la traverse 18 par une équerre 21. Sur la surface supérieure de cette extrémité opposée, est montée un bague 42 qui encercle un cylindre hydraulique 40 à l'intérieur duquel est déplacé hydrauliquement un piston, lequel piston est couplé par force magnétique à la bague 42 du bras porteur 26.

Le dispositif ainsi agencé fonctionne de la manière suivante. En référence à la figure 2, une bande de parement 3 défile à haute vitesse avec des déviations latérales aléatoires a. Cette déviation latérale est lue par un dispositif mécanique à galets, ou de préférence, un dispositif opto-électronique, laquelle lecture se traduit par un signal électrique a' appliqué sur une première entrée d'un comparateur 52.

La dernière position du bras porteur 26 est entre-temps présente sous la forme d'un signal b' issu du dispositif de lecture 44/46 puis appliqué à la seconde entrée du comparateur 52 qui applique un signal de commande à un dispositif pneumatique/hydraulique 54. Ce dispositif pneumatique/hydraulique de construction tout à fait conventionnelle permet de piloter le déplacement du piston interne du cylindre 40 à l'aide de vannes pneumatiques agissant sur l'admission ou l'échappement de l'huile dans le cylindre 40. Le déplacement du piston est transmis magnétiquement à la bague 42 et de ce fait, le bras porteur 26 sera amené dans une nouvelle position de telle sorte que le bord latéral 34' de la racle 34 orientée vers le milieu du rouleau 12 se retrouve en correspondance avec le bord 3' concerné de la bande de papier de recouvrement 3.

Comme mieux illustré sur la figure 2, la lame 32 diminue sensiblement l'épaisseur du film initial de colle 13 et ce sur une bande 13''. La racle 34 peut alors complètement enlever la colle sur une bande 13' de la surface du rouleau-encolleur 12. Ainsi, les crêtes de papier ondulé 5 qui, du fait de la déviation de la bande de parement 3 ne seront pas recouvertes, se retrouvent également non encollées, ce qui élimine ainsi tout risque de salissures de la station double face suivante.

Il est à noter que la bande laissée totalement encollée à chaque extrémité du rouleau-encolleur ne pourra nullement déposer de colle sur le cylindre-guide 10 de par la présence de l'écart toujours bien supérieur à 1 millimètre présent entre le rouleau-encolleur 12 et le cylindre-guide 10. Cette bande de colle aux extrémités ne fait alors que se renouveler sans autre.

On a pu atteindre, lors d'essais en atelier, des vitesses de déplacement b, pour l'ajustement de position du bras porteur 26, de l'ordre de 200 millimètres/seconde, ce qui constitue pratiquement le quadruple de la vitesse d'ajustement du dispositif de l'état de la technique mentionné précédemment. De plus, grâce à la sensibilité obtenue par l'amplification pneumatique/hydraulique et de par la liaison sans perte entre le piston magnétique du cylindre 40 et le bras 26 apte à coulisser pratiquement sans frottement, on obtient une précision remarquable de positionnement.

Enfin, et avantage non négligeable, ce dispositif étant relativement simple dans sa conception, il s'avère d'un coût de réalisation tout à fait raisonnable. De nombreuses améliorations peuvent être apportées à ce dispositif de limitation d'encollage selon cette invention.

## Revendications

1. Dispositif de limitation de la largeur d'encollage au sein d'une machine de fabrication en continu d'un élément en bande stratifié comprenant un premier dispositif de détection de la position instantanée des bords d'un premier élément en bande passant par un premier cylindre-guide, lequel dispositif pilote un second dispositif contrôlant la position et la largeur de la colle (13) recueillie par un rouleau-encolleur (12) rotatif barbotant dans un bac de colle (16) puis déposant cette colle sur un second élément en bande (5) passant autour d'un second cylindre-guide (10), caractérisé en ce que le second dispositif comprend une paire de racles (34), chacune étant tenue perpendiculairement contre le rouleau-encolleur par des moyens (26, 24, 22, 18, 40, 42) contrôlant sa position le long du bord de ce rouleau-encolleur en fonction de la lecture du premier dispositif de telle sorte que le bord intérieur de la bande de colle (13') enlevé par cette racle soit analogue à la position du bord correspondant (3') du premier élément en bande.

2. Dispositif selon la revendication 1, caractérisé en ce que chaque racle (34) est doublée d'une lame inférieure (32) plus large, parallèle et écartée du rouleau-encolleur d'une distance prédéterminée pour réduire l'épaisseur du film de colle parvenant à cette racle.

3. Dispositif selon la revendication 1 ou 2, caractérisé en ce que les moyens de maintien et de positionnement de la racle (34) et, si désiré, de la lame (32), comprennent un bras porteur (26) sensiblement perpendiculaire au rouleau-encolleur et monté sur un chariot (24) pouvant coulisser le long d'un chemin (22) solidaire d'une traverse (18) parallèle au rouleau-encolleur, la racle (34) et, si désiré, la lame (32) étant fixées en l'extrémité orientée vers le rouleau-encolleur, l'autre extrémité portant un moyen de détection de position (44) placé en vis-à-vis d'une réglette de lecture (46) montée le long de la traverse (18) et étant entraînée le long de la traverse par un actuateur linéaire (40, 42).

4. Dispositif selon la revendication 3, caractérisé en ce que l'actuateur linéaire est un cylindre hydraulique séparé en deux chambres par un piston flottant (40), la liaison entre ce piston et une bague (40) cerclant le cylindre et solidaire de l'extrémité du bras porteur (26) étant réalisée par magnétisme.

5. Dispositif selon la revendication 1, caractérisé en ce que la racle est une tôle de bronze ou de plastique.

6. Dispositif selon la revendication 2, caractérisé en ce que la lame (32) est en cuivre ou en laiton.

7. Utilisation d'un dispositif selon la revendication 1 dans une station d'encollage double face au sein d'une machine de fabrication de carton ondulé.

## Claims

1. Device destined to limit the glue width and arranged within a machine which continually processes a stratified web-like workpiece, which latter device comprises a first apparatus for detecting the instantaneous position of the edges of a first web-like workpiece travelling around a first guiding roll, the said apparatus driving a second apparatus that controls the position and the width of the glue film (13) gathered by a rotary sizing roll (12) which dips in a glue container (16) and applies this glue on a second web-like workpiece (5) traveling around a second guiding roll (10), characterized by the fact that the second apparatus includes a pair of doctors (34) which is held perpendicularly against the sizing roll with the help of means (26, 24, 22, 18, 40, 42) that control the doctors position along the edge of this sizing roll depending on the scanning result of the first apparatus and in such a way that the inner edge of the glue strip (13') scraped by this doctor matches the position of the corresponding edge (3') of the first web-like workpiece.

2. Device according to claim 1, characterized by the fact that each doctor (34) is doubled with a larger lower blade which is parallel to and separated from the sizing roll by a predetermined distance so as to reduce the thickness of the glue film reaching this doctor.

3. Device according to claim 1 or 2, characterized by the fact that the means for holding and positioning the doctor (34) and, if wanted, the blade (32) comprise a carrying arm (26) which is almost perpendicular to the sizing roll and fitted on a carriage (24) which can slide along the rails (22) fixed on a crossbar (18) itself parallel to the sizing roll, the doctor (34) and, if wanted, the blade (32) being fitted on the end oriented towards the sizing roll, whereas the other end carries means (44) for position detection located opposite a scanning rule (46) which is fitted along the crossbar (18) and driven along the said crossbar by a linear actuator (40, 42).

4. Device according to claim 3, characterized by the fact that the linear actuator is a hydraulic cylinder separated into two chambers by a flotting piston (40), the link between this piston and a ring (40) which surrounds the cylinder and is fixed to the end of the carrying arm (26) being achieved by magnetism.

5. Device according to claim 1, characterized by the fact that the doctor is made out of a bronze or rigid plastic board.

6. Device according to claim 2, characterized by the fact that the blade (32) is made of copper or brass.

7. Use of device according to claim 1 and located in a double-face sizing station that is arranged within a machine which produces corrugated board.

## Patentansprüche

1. Vorrichtung zur Begrenzung der Leimauftragsbreite in einer Schichtmaschine bestehend aus einer ersten Vorrichtung zum Ermitteln des momentanen Standortes der Ränder eines ersten bahnartigen, um einen ersten Leitzylinder herum verlaufenden Elementes, wobei diese Vorrichtung eine zweite Vorrichtung steuert, welche die Position und die Breite des Leimfilms (13) kontrolliert, welcher aufgefangen wird von einer rotierenden Leimauftragswalze (12), die in einen Leimbehälter (16) eintaucht, um diesen Leim anschliessend auf ein zweites bahnartiges Element (5) aufzutragen, welches um einen zweiten Leitzylinder (10) herum verläuft, dadurch gekennzeichnet, dass die zweite Vorrichtung mit einem Paar Schaber (34) versehen ist, welche senkrecht gegen die Leimauftragswalze gedrückt sind mit Hilfe von Mitteln (26, 24, 22, 18, 40, 42), die die Position dieser Schaber entlang des Randes der Leimauftragswalze kontrollieren, abhängig von der Ablesung der ersten Vorrichtung in einer Weise, dass der innere, von diesem Schaber abgestrichene Rand des Leimstreifens (13') analog ist zur Position des entsprechenden Randes (3') des ersten bahnartigen Elementes.

2. Vorrichtung gemäss Patentanspruch 1, dadurch gekennzeichnet, dass jeder Schaber (34) mit einem breiteren unteren Blatt (32) ausgerüstet ist, wobei dieses Blatt parallel und in einem vorbestimmten Abstand zur Leimauftragswalze angeordnet ist, um die Auftragsdicke des diesen Schaber erreichenden Leimfilms zu reduzieren.

3. Vorrichtung gemäss Patentanspruch 1 oder 2, dadurch gekennzeichnet, dass die Mittel zum Halten und Positionieren des Schabers und, falls gewünscht des Blattes (32), einen Tragearm (26) umfassen, der fast senkrecht zur Leimauftragswalze angeordnet ist und angebracht auf einem Wagen (24) welcher entlang der Schienen (22) gleiten kann, die ihrerseits auf einer Querstange (18) parallel zur Leimauftragswalze angebracht sind, der Schaber (34) und, falls gewünscht das Blatt (32), ist montiert auf dem zur Leimauftragswalze orientierten Ende, während das andere, Mittel zum Ermitteln der Position (44) tragende Ende gegenüber dem Lesemassstab (45) angeordnet ist, welcher entlang der Querstange (18) angebracht ist und entlang dieser Querstange von einem Linearbewegungsapparat (40, 42) mitgenommen wird.

4. Vorrichtung gemäss Patentanspruch 3, dadurch gekennzeichnet, dass der Linearbewegungsapparat ein von einem schwebenden Kolben (40) in zwei Kammern unterteilter Hydraulikzylinder ist, die Verbindung zwischen diesem Kolben und einem die Walze umspannenden und auf das Ende des Tragearms (26) montierten Ring (40) erfolgt magnetisch.

5. Vorrichtung gemäss Patentanspruch 1, dadurch gekennzeichnet, dass der Schaber (34) aus einer Platte aus Bronze oder Plastik gefertigt ist.

6. Vorrichtung gemäss Patentanspruch 2, dadurch gekennzeichnet, dass das Blatt (32) aus Kupfer oder Messing gefertigt ist.

7. Gebrauch einer Vorrichtung gemäss Patentanspruch 1 in einer doppelseitigen Leimstation innerhalb einer Maschine zur Herstellung von Wellpappe.
